(19) Europäisches Patentamt / European Patent Office / Office européen des brevets

(11) **EP 4 385 752 B1**

(12) **EUROPEAN PATENT SPECIFICATION**

(45) Date of publication and mention of the grant of the patent:
**31.12.2025 Bulletin 2026/01**

(21) Application number: **23208995.3**

(22) Date of filing: **10.11.2023**

(51) International Patent Classification (IPC):
***B60C 11/00*** *(2006.01)* ***B60C 1/00*** *(2006.01)*
***C08L 9/06*** *(2006.01)*

(52) Cooperative Patent Classification (CPC):
(C-Sets available)
**C08L 9/06; B60C 1/0016;** B60C 11/033;
B60C 2011/0033 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.12.2022 JP 2022194168**
**23.01.2023 JP 2023008305**

(43) Date of publication of application:
**19.06.2024 Bulletin 2024/25**

(73) Proprietor: **Sumitomo Rubber Industries, Ltd.**
**Kobe-shi, Hyogo 651-0072 (JP)**

(72) Inventor: **YAMAMOTO, Keisuke**
**Kobe-shi, Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 4 008 568** **EP-A1- 4 056 384**
**JP-A- 2020 006 871**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 385 752 B1

(52) Cooperative Patent Classification (CPC): (Cont.)

C-Sets
**C08L 9/06, C08L 9/06, C08L 25/16, C08L 91/00, C08L 91/08, C08K 3/04, C08K 3/36, C08K 5/548, C08K 5/103, C08K 3/22, C08K 5/09, C08K 3/06, C08K 5/18, C08K 5/47, C08K 5/31;**
**C08L 9/06, C08L 9/06, C08L 45/02, C08L 91/00, C08L 91/08, C08K 3/04, C08K 3/36, C08K 5/548, C08K 5/103, C08K 3/22, C08K 5/09, C08K 3/06, C08K 5/18, C08K 5/47, C08K 5/31;**
**C08L 9/06, C08L 9/06, C08L 65/00, C08L 91/00, C08L 91/08, C08K 3/04, C08K 3/36, C08K 5/548, C08K 5/103, C08K 3/22, C08K 5/09, C08K 3/06, C08K 5/18, C08K 5/47, C08K 5/31**

## Description

TECHNICAL FIELD

The present invention relates to a tire.

BACKGROUND ART

Passenger car tires and multi-purpose sporty utility car tires have low ground contact pressure per unit area. Tread portions of these tires to be in contact with the road surface are required to have all of good abrasion resistance, good wet grip performance, and high fuel economy. In particular, good abrasion resistance is desired.

SUMMARY OF INVENTION

TECHNICAL PROBLEM

The present invention aims to solve the problem and to provide tires having excellent abrasion resistance.

SOLUTION TO PROBLEM

The present invention relates to a tire including a tread, the tread including a rubber composition that contains a rubber component including a styrene-butadiene rubber, a silica, a carbon black, a resin, and an ester plasticizer, the rubber composition containing the silica in an amount of 90 parts by mass or more and the carbon black in an amount of 15 parts by mass or more per 100 parts by mass of the rubber component, the rubber composition satisfying the following formula (1), the tire satisfying the following formulas (2) and (3) with a total plasticizer content of the rubber composition, a total styrene content S (% by mass) of the rubber component, and a land ratio LR (%) and a thickness T (mm) of the tread:

$$(1)\ \text{Amount of silica/Amount of carbon black} > 1$$

$$(2)\ (\text{Total plasticizer content/LR}) \times 100 > 50$$

$$(3)\ S \times T < 300.$$

ADVANTAGEOUS EFFECTS OF INVENTION

The tire of the present invention includes a tread, the tread including a rubber composition that contains a rubber component including a styrene-butadiene rubber, a silica, a carbon black, a resin, and an ester plasticizer, the rubber composition containing the silica in an amount of 90 parts by mass or more and the carbon black in an amount of 15 parts by mass or more per 100 parts by mass of the rubber component, the rubber composition satisfying the formula (1), the tire satisfying the formulas (2) and (3) with a total plasticizer content of the rubber composition, a total styrene content S (% by mass) of the rubber component, and a land ratio LR (%) and a thickness T (mm) of the tread. This tire has excellent abrasion resistance.

DESCRIPTION OF EMBODIMENTS

The tire of the present invention includes a tread. The tread includes a rubber composition that contains a rubber component including a styrene-butadiene rubber, a silica, a carbon black, a resin, and an ester plasticizer. The rubber composition contains the silica in an amount of 90 parts by mass or more and the carbon black in an amount of 15 parts by mass or more per 100 parts by mass of the rubber component. The rubber composition satisfies the formula (1). The tire satisfies the formulas (2) and (3) with a total plasticizer content of the rubber composition, a total styrene content S (% by mass) of the rubber component, and a land ratio LR (%) and a thickness T (mm) of the tread. The tire has excellent abrasion resistance.

The reason for the above-mentioned advantageous effect is not exactly clear, but the advantageous effect is believed to be attributed to the following mechanism.

The below-described [1] to [6] are believed to occur in a tire including a tread, the tread including a rubber composition that contains a rubber component including a styrene-butadiene rubber, a silica, a carbon black, a resin, and

an ester plasticizer, the rubber composition containing the silica in an amount of 90 parts by mass or more and the carbon black in an amount of 15 parts by mass or more per 100 parts by mass of the rubber component, the rubber composition satisfying the formula (1), the tire satisfying the formulas (2) and (3) with a total plasticizer content of the rubber composition, a total styrene content S (% by mass) of the rubber component, and a land ratio LR (%) and a thickness T (mm) of the tread.

[1] In a tread-forming rubber composition with a high silica content, the silica may aggregate and poorly disperse to have a low interaction with the styrene-butadiene rubber, so that abrasion resistance tends to be reduced. When a resin is added to the rubber composition, the resin, which is viscous and can be well blended with the rubber component, captures the silica during kneading, thereby improving silica dispersion. Presumably, the improved silica dispersion increases bonding between the styrene-butadiene rubber and the silica.

[2] The amount of the carbon black is smaller than the amount of the silica. The lower amount of the carbon black is entangled in the polymer chains of the styrene-butadiene rubber which is sufficiently restricted by the large amount of silica.

[3] The carboxyl groups on the surface of the carbon black interact with the ester groups in the ester plasticizer. Thus, the ester plasticizer covers the surface of the carbon black to further improve the compatibility with the rubber component and the resin. Presumably, this enables the entanglement between the polymer chains and the carbon black even when the styrene-butadiene rubber is sufficiently fixed by the silica.

[4] Both the resin and the ester plasticizer have a polarity and therefore have high compatibility. Presumably, this improves the dispersion of the silica adsorbed to the resin and the ester plasticizer.

[5] The total plasticizer content and the land ratio of the tread satisfy the formula (2), meaning that the land ratio of the tread is increased along with an increase in the total silica content. During driving, the plasticizer in the tread has a tendency to migrate toward the ground contact face due to the centrifugal force. Presumably, the increased land ratio of the tread can suppress the concentration of the plasticizer to the land portion of the tread.

[6] The total styrene content of the rubber component and the thickness of the tread satisfy the formula (3), so that heat build-up in the rubber is reduced. Presumably, this suppresses an increase in the mobility of the plasticizer and the resin caused by the heat build-up in the rubber, so that the migration of the plasticizer may be suppressed.

The [1] to [6] can produce a state in which the carbon black, the ester plasticizer, and the resin are uniformly dispersed in the network of a large amount of silica and which is unlikely to change during driving. Thus, the abrasion resistance can be improved.

Presumably, tires having excellent abrasion resistance can be obtained due to the above-mentioned effects.

As described above, the present invention solves the problem in providing tires having excellent abrasion resistance by providing a tire including a tread, the tread including a rubber composition that contains a rubber component including a styrene-butadiene rubber, a silica, a carbon black, a resin, and an ester plasticizer, the rubber composition containing the silica in an amount of 90 parts by mass or more and the carbon black in an amount of 15 parts by mass or more per 100 parts by mass of the rubber component, the rubber composition satisfying the formula (1): Amount of silica/Amount of carbon black > 1, the tire satisfying the formula (2): (Total plasticizer content/LR) $\times$ 100 > 50 and the formula (3): $S \times T < 300$ with a total plasticizer content of the rubber composition, a total styrene content S (% by mass) of the rubber component, and a land ratio LR (%) and a thickness T (mm) of the tread. In other words, the parameters of the formulas (1) to (3) do not define the problem (aim). The problem herein is to provide tires having excellent abrasion resistance. In order to solve the problem, the tire has been formulated to satisfy the parameters.

The tire of the present invention includes a tread. The tread includes a rubber composition that contains a rubber component including a styrene-butadiene rubber, a silica, a carbon black, a resin, and an ester plasticizer.

Herein, the term "rubber component" refers to a component that has a weight average molecular weight (Mw) of more than 10000 and contributes to crosslinking. Polymer components which are not extracted in 24-hour extraction of a rubber composition with acetone correspond to rubber components. The rubber component is solid at room temperature (25°C).

The weight average molecular weight of the rubber component is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) and calibrated with polystyrene standards.

The total styrene content S (% by mass) of the rubber component in the rubber composition is preferably 5.0% by mass or higher, more preferably 10.0% by mass or higher, still more preferably 15.0% by mass or higher, further still more preferably 20.0% by mass or higher, further still more preferably 24.0% by mass or higher, while it is preferably 60.0% by

mass or lower, more preferably 50.0% by mass or lower, still more preferably 40.0% by mass or lower, further still more preferably 35.0% by mass or lower, further still more preferably 32.0% by mass or lower, particularly preferably 30.0% by mass or lower. When the total styrene content is within the range indicated above, the advantageous effect tends to be better achieved.

The total styrene content of the rubber component refers to the total amount (unit: % by mass) of the styrene moieties in the entire rubber component and can be calculated by $\Sigma$[(Amount of each rubber component) $\times$ (Styrene content of the each rubber component)/100]. For example, when 100% by mass of rubber components include 85% by mass of a SBR having a styrene content of 40% by mass, 5% by mass of a SBR having a styrene content of 25% by mass, and 10% by mass of a BR having a styrene content of 0% by mass, the total styrene content is 35.25% by mass (= 85 $\times$ 40/100 + 5 $\times$ 25/100 + 10 $\times$ 0/100).

The styrene content of the rubber component can be measured by nuclear magnetic resonance (NMR).

In EXAMPLES herein, the total styrene content of the rubber component is calculated by the above-mentioned equation. Yet, the total styrene content may be determined by analyzing the tire using, for example, a pyrolysis gas chromatography/mass spectrometry (Py-GC/MS) system or the like.

The rubber composition contains a rubber component including a styrene-butadiene rubber (SBR).

Non-limiting examples of the SBR include emulsion-polymerized styrene-butadiene rubber (E-SBR) and solution-polymerized styrene-butadiene rubber (S-SBR). To better achieve the advantageous effect, emulsion-polymerized styrene-butadiene rubber is preferred among these. These may be used alone or in combinations of two or more.

The styrene content (amount of styrene) of the SBR is preferably 5% by mass or higher, more preferably 10% by mass or higher, still more preferably 15% by mass or higher, further still more preferably 20% by mass or higher, further still more preferably 24% by mass or higher, while it is preferably 60% by mass or lower, more preferably 40% by mass or lower, still more preferably 35% by mass or lower, further still more preferably 32% by mass or lower, particularly preferably 30% by mass or lower. When the styrene content is within the range indicated above, the advantageous effect tends to be better achieved.

Herein, the styrene content of the rubber component is determined by $^1$H-NMR analysis.

The vinyl content (amount of vinyl) of the SBR is preferably 5% by mass or higher, more preferably 10% by mass or higher, still more preferably 15% by mass or higher, further still more preferably 17% by mass or higher, while it is preferably 50% by mass or lower, more preferably 40% by mass or lower, still more preferably 27% by mass or lower, further still more preferably 25% by mass or lower. When the vinyl content is within the range indicated above, the advantageous effect tends to be better achieved.

Herein, the vinyl content of the rubber component is determined by $^1$H-NMR analysis.

SBR products manufactured or sold by Sumitomo Chemical Co., Ltd., JSR Corporation, Asahi Kasei Corporation, Zeon Corporation, ENEOS Materials Corporation, etc. may be used as the SBR.

When one type of SBR is used, the styrene content of the SBR refers to the styrene content of the one SBR, while when multiple types of SBR are used, it refers to the average styrene content.

The average styrene content of the SBR can be calculated using the equation: {$\Sigma$(amount of each SBR $\times$ styrene content of the each SBR)}/amount of total SBR. For example, when 100% by mass of rubber components include 85% by mass of a SBR having a styrene content of 40% by mass and 5% by mass of a SBR having a styrene content of 25% by mass, the average styrene content of the SBR is 39.2% by mass (= (85 $\times$ 40 + 5 $\times$ 25)/(85 + 5)).

The vinyl content of the SBR refers to the vinyl content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: $\Sigma${amount of each SBR $\times$ (100 (% by mass) - styrene content (% by mass) of the each SBR) $\times$ vinyl content (% by mass) of the each SBR}/$\Sigma${amount of each SBR $\times$ (100 (% by mass) - styrene content (% by mass) of the each SBR)}. For example, when 100 parts by mass of rubber components include 75 parts by mass of a SBR having a styrene content of 40% by mass and a vinyl content of 30% by mass, 15 parts by mass of a SBR having a styrene content of 25% by mass and a vinyl content of 20% by mass, and the remaining 10 parts by mass of a rubber component other than SBR, the average vinyl content of the SBR is 28% by mass (= {75 $\times$ (100 (% by mass) - 40 (% by mass)) $\times$ 30 (% by mass) + 15 $\times$ (100 (% by mass) - 25 (% by mass)) $\times$ 20 (% by mass) }/{75 $\times$ (100 (% by mass) - 40 (% by mass)) + 15 $\times$ (100 (% by mass) - 25 (% by mass))}.

The SBR may be either unmodified or modified SBR.

The modified SBR may be any SBR having a functional group interactive with filler such as silica or carbon black. Examples include a chain end-modified SBR obtained by modifying at least one chain end of a SBR with a compound (modifier) having the above functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); and a chain end-modified SBR

into which a hydroxy or epoxy group has been introduced by modification (coupling) with a polyfunctional compound having two or more epoxy groups in the molecule. These may be used alone in combinations of two or more.

Examples of the functional group include functional groups each including at least one atom selected from the group consisting of a nitrogen atom, an oxygen atom, and a silicon atom. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. To better achieve the advantageous effect, preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The amount of the SBR based on 100% by mass of the rubber component content is preferably 40% by mass or more, more preferably 50% by mass or more, still more preferably 60% by mass or more, particularly preferably 70% by mass or more, and may be 100% by mass. When the amount is within the range indicated above, the advantageous effect tends to be better achieved.

The rubber composition may contain a different rubber component other than the SBR.

Examples of the different rubber component include diene-based rubbers other than SBR. Examples of diene-based rubbers include isoprene-based rubbers, polybutadiene rubbers (BR), styrene-isoprene-butadiene rubbers (SIBR), ethylene-propylene-diene rubbers (EPDM), chloroprene rubbers (CR), and acrylonitrile-butadiene rubbers (NBR). Examples of rubber components other than the above-mentioned rubber components include butyl-based rubbers and fluororubbers. These may be used alone or in combinations of two or more. Isoprene-based rubbers and BR are preferred among these.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more.

The cis content of the BR is preferably 20% by mass or higher, more preferably 40% by mass or higher, still more preferably 60% by mass or higher, particularly preferably 80% by mass or higher, most preferably 90% by mass or higher. The upper limit is not limited. When the cis content is within the range indicated above, the advantageous effect tends to be better achieved.

Herein, the cis content of a rubber component can be measured by infrared absorption spectrometry.

When one type of BR is used, the cis content of the BR refers to the cis content of the one BR, while when multiple types of BR are used, it refers to the average cis content.

The average cis content of BR may be calculated by {Σ[(Amount of each BR) × (Cis content of the each BR)]}/(Total amount of all types of BR). For example, when 100% by mass of rubber components include 20% by mass of a BR having a cis content of 90% by mass and 10% by mass of a BR having a cis content of 40% by mass, the average cis content of the BR is 73.3% by mass (= (20 × 90 + 10 × 40)/(20 + 10)).

The BR may be either unmodified or modified BR. Examples of the modified BR include those into which functional groups listed for the modified SBR have been introduced.

For example, usable BR may be commercially available from Ube Industries, Ltd., JSR Corporation, Asahi Kasei Corporation, Zeon Corporation, etc.

The amount of isoprene-based rubbers based on 100% by mass of the rubber component content is preferably 10% by mass or more, more preferably 20% by mass or more, while it is preferably 40% by mass or less, more preferably 30% by mass or less. When the amount is within the range indicated above, the advantageous effect tends to be better achieved.

The amount of BR based on 100% by mass of the rubber component content is preferably 10% by mass or more, more preferably 20% by mass or more, while it is preferably 40% by mass or less, more preferably 30% by mass or less. When the amount is within the range indicated above, the advantageous effect tends to be better achieved.

The rubber component may be an oil-extended rubber that has been extended with an oil or a resin-extended rubber that has been extended with a resin. These may be used alone or in combinations of two or more. An oil-extended rubber is preferred among these.

The oil in the oil-extended rubber or the resin in the resin-extended rubber is as described below for the plasticizer.

The oil content of the oil-extended rubber or the resin content of the resin-extended rubber is not limited, and it is usually about 10 to 50 parts by mass per 100 parts by mass of the rubber solid content.

The rubber composition contains silica.

Non-limiting examples of the silica include dry silica (anhydrous silica) and wet silica (hydrous silica). These may be used alone or in combinations of two or more. Wet silica is preferred among these because it contains a large number of silanol groups.

Usable silica may be commercially available from Degussa, Rhodia, Tosoh Silica Corporation, Solvay Japan, Tokuyama Corporation, etc.

The nitrogen adsorption specific surface area ($N_2SA$) of the silica is preferably 80 $m^2/g$ or more, more preferably 150 $m^2/g$ or more, still more preferably 160 $m^2/g$ or more, further still more preferably 170 $m^2/g$ or more. The $N_2SA$ is preferably 300 $m^2/g$ or less, more preferably 250 $m^2/g$ or less, still more preferably 220 $m^2/g$ or less. When the $N_2SA$ is within the range indicated above, the advantageous effect tends to be better achieved.

Here, the $N_2SA$ of the silica is measured in accordance with ASTM D3037-81.

The average particle size of the silica is preferably 24 nm or less, more preferably 18 nm or less, still more preferably 17 nm or less, further still more preferably 16 nm or less, further still more preferably 15 nm or less, further still more preferably 14 nm or less, while it is preferably 6 nm or more, more preferably 9 nm or more, still more preferably 12 nm or more. When the average particle size is within the range indicated above, the advantageous effect tends to be better achieved.

Herein, the average particle size of the silica is determined by transmission electron microscopy (TEM). Specifically, silica particles are photographed using a transmission electron microscope to measure the particle size. The particle size is the spherical diameter when the particle has a spherical shape, the minor axis when the particle has an acicular or rod shape, or the average particle diameter through the center when the particle has an amorphous shape. Then, the average of the particle sizes of 100 fine particles is defined as the average particle size.

The amount of the silica per 100 parts by mass of the rubber component content is preferably 90 parts by mass or more, more preferably 95 parts by mass or more, still more preferably 100 parts by mass or more, while it is preferably 200 parts by mass or less, more preferably 150 parts by mass or less, still more preferably 120 parts by mass or less. When the amount is within the range indicated above, the advantageous effect tends to be better achieved.

The rubber composition that contains a silica preferably also contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide silane coupling agents and mercapto silane coupling agents are preferred among these.

Usable silane coupling agents may be commercially available from Evonik, Degussa, Momentive, Shin-Etsu Silicone, Tokyo Chemical Industry Co., Ltd., AZmax. Co., Dow Corning Toray Co., Ltd., etc.

The amount of silane coupling agents per 100 parts by mass of the silica content is preferably 3 parts by mass or more, more preferably 5 parts by mass or more, while it is preferably 25 parts by mass or less, more preferably 20 parts by mass or less, still more preferably 15 parts by mass or less, further still more preferably 10 parts by mass or less. When the amount is within the range indicated above, the advantageous effect tends to be better achieved.

The rubber composition contains carbon black.

Examples of the carbon black include N134, N110, N220, N234, N219, N339, N330, N326, N351, N550, and N762. These may be used alone or in combinations of two or more.

The nitrogen adsorption specific surface area ($N_2SA$) of the carbon black is preferably 50 $m^2/g$ or more, more preferably 100 $m^2/g$ or more, still more preferably 120 $m^2/g$ or more, further still more preferably 135 $m^2/g$ or more, particularly preferably 142 $m^2/g$ or more. The $N_2SA$ is preferably 250 $m^2/g$ or less, more preferably 200 $m^2/g$ or less, still more preferably 160 $m^2/g$ or less, particularly preferably 150 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The carbon black preferably has a dibutyl phthalate oil absorption (DBP oil absorption) of 80 mL/100 g or more, more preferably 90 mL/100 g or more, still more preferably 100 mL/100 g or more, further still more preferably 110 mL/100 g or more, particularly preferably 115 mL/100 g or more. The DBP oil absorption is also preferably 200 mL/100 g or less, more preferably 170 mL/100 g or less, still more preferably 150 mL/100 g or less, particularly preferably 125 mL/100 g or less. When the DBP oil absorption is within the range indicated above, the advantageous effect tends to be better achieved.

The dibutyl phthalate oil absorption of the carbon black may be measured in accordance with JIS-K6217-4:2001.

Usable carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black per 100 parts by mass of the rubber component content is preferably 15 parts by mass or more, more preferably 17 parts by mass or more, still more preferably 20 parts by mass or more, while it is preferably 100 parts by mass or less, more preferably 80 parts by mass or less, still more preferably 50 parts by mass or less, particularly preferably 30 parts by mass or less. When the amount is within the range indicated above, the advantageous effect tends to be better achieved.

In the rubber composition, the amount of the silica (the amount (parts by mass) of the silica per 100 parts by mass of the rubber component) and the amount of the carbon black (the amount (parts by mass) of the carbon black per 100 parts by mass of the rubber component) satisfy the following formula (1):

(1) Amount of silica/Amount of carbon black > 1.

The lower limit of the ratio in the formula (1) is preferably higher than 1.5, more preferably higher than 3.5, still more preferably 5.0 or higher, further still more preferably higher than 5.5, further still more preferably 6.0 or higher. The upper limit of the ratio in the formula (1) is not limited, and it is preferably lower than 20.0, more preferably lower than 15.0, still more preferably lower than 8.0. When the ratio is within the range indicated above, the advantageous effect tends to be better achieved.

The rubber composition may contain different fillers other than the silica and the carbon black. The different fillers may be known materials in the rubber industry. Examples include inorganic fillers such as calcium carbonate, talc, alumina, clay, aluminum hydroxide, aluminum oxide, and mica; and difficult-to-disperse fillers.

The total filler content (total amount of fillers) per 100 parts by mass of the rubber component content is preferably 50 parts by mass or more, more preferably 80 parts by mass or more, still more preferably 100 parts by mass or more, further still more preferably 120 parts by mass or more, further still more preferably 130 parts by mass or more, further still more preferably 140 parts by mass or more, while it is preferably 300 parts by mass or less, more preferably 250 parts by mass or less, still more preferably 200 parts by mass or less, particularly preferably 150 parts by mass or less. When the total filler content is within the range indicated above, the advantageous effect tends to be better achieved.

The silica content based on 100% by mass of the filler content in the rubber composition is preferably 40% by mass or higher, more preferably 60% by mass or higher, still more preferably 70% by mass or higher. The upper limit is not limited, and it is preferably 95% by mass or lower, more preferably 90% by mass or lower, still more preferably 85% by mass or lower. When the silica content is within the range indicated above, the advantageous effect tends to be better achieved.

The rubber composition contains a plasticizer.

Herein, the term "plasticizer" refers to a component that imparts plasticity to rubber components and has a weight average molecular weight (Mw) of 10000 or less. It refers to a component which is extracted in 24-hour extraction of a rubber composition with acetone in accordance with JIS K 6229:2015. Examples of the plasticizer include liquid plasticizers which are liquid at room temperature (25°C) and solid plasticizers which are solid at room temperature (25°C). These may be used alone or in combinations of two or more.

The total plasticizer content (total amount of liquid plasticizers and solid plasticizers) of the rubber composition per 100 parts by mass of the rubber component content is preferably 10 parts by mass or more, more preferably 20 parts by mass or more, still more preferably 40 parts by mass or more, further still more preferably 60 parts by mass or more, further still more preferably 80 parts by mass or more, further still more preferably 92.5 parts by mass or more, further still more preferably 102.5 parts by mass or more, while it is preferably 200 parts by mass or less, more preferably 180 parts by mass or less, still more preferably 150 parts by mass or less, particularly preferably 110 parts by mass or less. When the total plasticizer content is within the range indicated above, the advantageous effect tends to be better achieved.

The total plasticizer content includes the amounts of oils and resins contained in rubber (oil-extended rubber) and sulfur (oil-containing sulfur).

Examples of the plasticizer include oils, ester plasticizers, resins, and liquid polymers. These may be used alone or in combinations of two or more.

The amount of liquid plasticizers per 100 parts by mass of the rubber component content in the rubber composition is preferably 5 parts by mass or more, more preferably 10 parts by mass or more, still more preferably 15 parts by mass or more, particularly preferably 20 parts by mass or more, while it is preferably 150 parts by mass or less,

more preferably 120 parts by mass or less, still more preferably 100 parts by mass or less, particularly preferably 80 parts by mass or less. When the amount is within the range indicated above, the advantageous effect tends to be better achieved.

The amount of solid plasticizers per 100 parts by mass of the rubber component content in the rubber composition is preferably 5 parts by mass or more, more preferably 8 parts by mass or more, still more preferably 10 parts by mass or more, further still more preferably 15 parts by mass or more, while it is preferably 50 parts by mass or less, more preferably 40 parts by mass or less, still more preferably 30 parts by mass or less, further still more preferably 25 parts by mass or less. When the amount is within the range indicated above, the advantageous effect tends to be better achieved.

Non-limiting examples of the oils include conventional oils, including process oils such as paraffinic process oils, aromatic process oils, naphthenic process oils, and low polycyclic aromatic (PCA) process oils such as TDAE and MES, acylglycerol-free plant oils, essential oils derived from natural products such as turpentine oil, and mixtures thereof. These may be used alone or in combinations of two or more. Paraffinic process oils are preferred among these. In view of life cycle analysis, lubricating oils after being used in mixers for mixing rubber, automobile engines, or other applications may appropriately be used.

Usable oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

The amount of oils per 100 parts by mass of the rubber component content in the rubber composition is preferably 1 part by mass or more, more preferably 5 parts by mass or more, still more preferably 10 parts by mass or more, further still more preferably 15 parts by mass or more, particularly preferably 20 parts by mass or more, while it is preferably 80 parts by mass or less, more preferably 70 parts by mass or less, still more preferably 60 parts by mass or less, further still more preferably 57.5 parts by mass or less, further still more preferably 47.5 parts by mass or less. When the amount is within the range indicated above, the advantageous effect tends to be better achieved.

Herein, the amount of oils does not include the amount of acylglycerol-containing plant oils described below.

Suitable examples of the ester plasticizer include ester plasticizers each including at least one compound selected from the group consisting of acylglycerol-containing plant oils, phosphoric acid esters, phthalic acid esters, aliphatic polybasic acid esters, trimellitic acid esters, acetic acid esters, and ricinoleic acid esters. These may be used alone or in combinations of two or more. To better achieve the advantageous effect, acylglycerol-containing plant oils, phosphoric acid esters, phthalic acid esters, and aliphatic polybasic acid esters are preferred among these. Moreover, acylglycerol-containing plant oils and aliphatic polybasic acid esters are suitable to reduce the amount of phosphorus used.

The SP value of the compound is preferably 8.0 or higher, more preferably 8.3 or higher, still more preferably 8.4 or higher, particularly preferably 8.5 or higher. The SP value is preferably 9.5 or lower, more preferably 9.0 or lower, still more preferably 8.8 or lower. An SP value within the range indicated above tends to ensure compatibility with diene-based rubbers such as SBR, so that the advantageous effect tends to be more suitably achieved. The term "SP value" refers to a solubility parameter calculated using the Hansen’s equation.

The compound has a freezing point of preferably - 100°C or higher, more preferably -80°C or higher. The freezing point is preferably -10°C or lower, more preferably -15°C or lower. When the freezing point is within the range indicated above, the advantageous effect tends to be better achieved.

Herein, the freezing point is measured as follows.

A sample is hermetically sealed in an aluminum cell, and the aluminum cell is inserted into a sample holder of a differential scanning calorimeter (DSC-60A available from Shimadzu Corporation). Then, an endothermic peak is observed while heating the sample holder up to 150°C at a rate of 10°C/min in a nitrogen atmosphere. The determined endothermic peak is defined as the freezing point.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). These may be used alone or in combinations of two or more.

Preferred among the plant oils are acylglycerol-containing plant oils, more preferred is acylglycerol, and particularly preferred is triacylglycerol. Herein, the term "acylglycerol" refers to a compound in which hydroxy groups of glycerol are ester-bonded to a carboxylic acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether the rubber composition contains the acylglycerol may be examined by any method such as $^1$H-NMR analysis. For example, a rubber composition containing triacylglycerol is immersed in deuterium chloroform at room temperature (25°C) for 24 hours. After removing the rubber composition, $^1$H-NMR is measured at room temperature. Signals observed at around 5.26 ppm, around 4.28 ppm, and around 4.15 ppm, referenced to the signal of tetramethylsilane (TMS, 0.00 ppm), are assumed as the signals of hydrogen atoms bound to carbon atoms adjacent to the oxygen atoms of ester groups. The term "around" in this paragraph refers to a range of $\pm$ 0.10 ppm.

The carboxylic acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid.

Examples of the phosphoric acid esters include known phosphate plasticizers such as mono-, di-, or triesters of phosphoric acid with C1-C12 monoalcohols or their (poly)oxyalkylene adducts. Specific examples include tris(2-ethylhexyl)phosphate, trimethyl phosphate, triethyl phosphate, tributyl phosphate, triphenyl phosphate, tricresyl phosphate, trixylenyl phosphate, cresyl diphenyl phosphate, and 2-ethylhexyl diphenyl phosphate.

Examples of the phthalic acid esters include known phthalate plasticizers such as diesters of phthalic acid with alcohols having approximately 1 to 13 carbon atoms. Specific examples include bis(2-ethylhexyl)phthalate, dimethyl phthalate, diethyl phthalate, dibutyl phthalate, diisodecyl phthalate, butyl benzyl phthalate, diisononyl phthalate, and ethyl phthalyl ethyl glycolate.

Examples of the aliphatic polybasic acid esters include aliphatic dibasic acid esters and aliphatic tribasic acid esters. To better achieve the advantageous effect, aliphatic dibasic acid esters such as adipate, azelate, sebacate, maleate, and fumarate are preferred among these.

Of these aliphatic dibasic acid esters, compounds represented by Formula (1) below can be particularly suitably used.

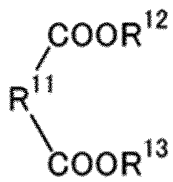

(1)

In Formula (1), $R^{11}$ represents a saturated or unsaturated divalent hydrocarbon group, and $R^{12}$ and $R^{13}$ are the same or different and each represent a branched or unbranched alkyl group or a group represented by $-(R^{14}-O)_n-R^{15}$ wherein the $R^{14}$ groups, the number of which is n, are the same or different and each represent a branched or unbranched alkylene group, $R^{15}$ represents a branched or unbranched alkyl group, and n represents an integer.

The saturated or unsaturated divalent hydrocarbon group for $R^{11}$ may be branched or unbranched, and examples include alkylene groups, alkenylene groups, and arylene groups. The saturated or unsaturated hydrocarbon group preferably has 1 to 10 carbon atoms, more preferably 6 to 10 carbon atoms. Specific examples of the alkylene groups include methylene, ethylene, propylene, butylene, pentylene, hexylene, heptylene, octylene, nonylene, and decylene groups. Specific examples of the alkenylene groups include vinylene, 1-propenylene, and 2-propenylene groups. Specific examples of the arylene groups include phenylene, tolylene, and xylylene groups.

The branched or unbranched alkyl group for $R^{12}$ or $R^{13}$ preferably has 1 to 15 carbon atoms. The lower limit of the number of carbon atoms is more preferably 4 or more, while the upper limit is more preferably 10 or less. Specific examples include methyl, ethyl, n-propyl, isopropyl, n-butyl, iso-butyl, sec-butyl, tert-butyl, pentyl, hexyl, heptyl, octyl, ethylhexyl, nonyl, and decyl groups.

In the group: $-(R^{14}-O)_n-R^{15}$ for $R^{12}$ or $R^{13}$, the branched or unbranched alkylene group for $R^{14}$ preferably has 1 to 3 carbon atoms. The branched or unbranched alkyl group for $R^{15}$ preferably has 1 to 10 carbon atoms. The lower limit of the number of carbon atoms is more preferably 2 or more, while the upper limit is more preferably 6 or less. Specific examples of the alkylene group and the alkyl group include those listed above. The integer n is preferably 1 to 10, more preferably 1 to 5, still more preferably 1 to 3.

To more suitably achieve the advantageous effect, $R^{11}$ is preferably an alkylene group, and preferably at least one, more preferably both, of $R^{12}$ and $R^{13}$ is a branched alkyl group.

Suitable examples of the aliphatic dibasic acid esters represented by Formula (1) include bis(2-ethylhexyl) sebacate, di-n-butyl adipate, and diisobutyl adipate, as well as bis(alkoxyalkoxyalkyl) adipates having the group: $-(R^{14}-O)_n-R^{15}$ such as bis[2-(2-butoxyethoxy)ethyl] adipate. These may be used alone or in combinations of two or more.

Examples of the trimellitic acid esters include known trimellitate plasticizers such as triesters of trimellitic acid with C8-C13 saturated aliphatic alcohols. Specific examples include tri-2-ethylhexyl trimellitate, tri-n-octyl trimellitate, tridecyl trimellitate, triisodecyl trimellitate, and di-n-octyl-n-decyl trimellitate.

Examples of the acetic acid esters include known acetate plasticizers such as esters of acetic acid with mono- or

polyglycerol. Specific examples include glyceryl triacetate, 2-ethylhexyl acetate, and polyglycerol acetate having a degree of polymerization of polyglycerol of 2 to 4 and a degree of acetylation of 50 to 100%.

Examples of the ricinoleic acid esters include known ricinoleate plasticizers such as alkyl acetyl ricinoleates (alkyl group: C1 to C10 alkyl group), including methyl acetyl ricinoleate and butyl acetyl ricinoleate.

The ester plasticizer may include other components in addition to the specified compounds. Examples of other components include known plasticizers other than the specified compounds, and polyalkylene glycol alkyl ethers such as diethylene glycol monobutyl ether.

The specified compound content based on 100% by mass of the ester plasticizer content is preferably 80% by mass or higher, more preferably 90% by mass or higher, and may be 100% by mass. When the specified compounds are present in the proportion indicated above, the advantageous effect tends to be more suitably achieved.

Examples of the ester plasticizer include tris(2-ethylhexyl) phosphate (TOP, freezing point: -70°C or lower, flash point: 204°C, SP value: 8.1, Mw: 435), bis(2-ethylhexyl) sebacate (DOS, freezing point: -62°C, flash point: 222°C, SP value: 8.5, Mw: 427), bis(2-ethylhexyl) phthalate (DOP, freezing point: -51°C, flash point: 218°C, SP value: 8.9, Mw: 391), and bis[2-(2-butoxyethoxyethyl)ethyl] adipate (BXA, freezing point: - 19°C, flash point: 207°C, SP value: 8.7, Mw: 435). Suitable among these are DOS, TOP, and BXA as they are highly compatible with rubber components and have a flash point of 200°C or higher and a weight average molecular weight as high as 400 or more.

Usable ester plasticizers may be commercially available from Daihachi Chemical Industry Co., Ltd., Taoka Chemical Co., Ltd, etc.

Usable plant oils may be commercially available from Nisshin Oillio Group, J-oil mills, Showa Sangyo Co., Ltd., Fuji Oil Co., Ltd., Miyoshi Oil & Fat Co., Ltd, Boso oil and fat Co., Ltd., etc.

The rubber composition contains an ester plasticizer as the plasticizer.

The ester plasticizer is preferably an acylglycerol-containing plant oil, a phosphoric acid ester, a phthalic acid ester, or an aliphatic polybasic acid ester, more preferably an acylglycerol-containing plant oil or an aliphatic polybasic acid ester, still more preferably an acylglycerol-containing plant oil, DOS, TOP, or BXA.

The amount of the ester plasticizer per 100 parts by mass of the rubber component content in the rubber composition is preferably 1 part by mass or more, more preferably 3 parts by mass or more, still more preferably 5 parts by mass or more, further still more preferably 10 parts by mass or more, while it is preferably 40 parts by mass or less, more preferably 30 parts by mass or less, still more preferably 20 parts by mass or less. When the amount is within the range indicated above, the advantageous effect tends to be better achieved.

The resin may be solid (solid resin) or liquid (liquid resin) at room temperature (25°C). Non-limiting examples include resins generally used as compounding ingredients for tires. In view of abrasion resistance, the resin is preferably an aromatic petroleum resin.

Examples of the aromatic petroleum resin include petroleum resins having aromatic rings, such as phenolic resins, coumarone-indene resins, terpene resins, styrene resins, acrylic resins, rosin resins, and dicyclopentadiene resins (DCPD resins). These solid resins may be hydrogenated (hydrogenated resins). The resins may be used alone, or two or more of them may be used in admixture. Moreover, the resins themselves may be copolymers of multiple types of monomer components.

The phenolic resins are particularly preferably alkylphenol resins. Examples of the alkylphenol resins include alkylphenol-aldehyde condensation resins produced by reacting an alkylphenol and an aldehyde such as formaldehyde, acetaldehyde, or furfural in the presence of an acid or alkali catalyst; alkylphenol-alkyne condensation resins produced by reacting an alkylphenol and an alkyne such as acetylene; and modified alkylphenol resins obtained by modifying any of the foregoing resins with a compound such as cashew oil, tall oil, linseed oil, various animal or plant oils, unsaturated fatty acids, rosin, alkylbenzene resins, aniline, or melamine. Alkylphenol-alkyne condensation resins are preferred among these, with alkylphenol-acetylene condensation resins being particularly preferred.

Examples of the alkylphenols of the alkylphenol resins include cresol, xylenol, t-butylphenol, octylphenol, and nonylphenol. Branched alkyl group-containing phenols such as t-butylphenol are preferred among these, with t-butylphenol being particularly preferred.

The term "coumarone-indene resins" refers to resins containing coumarone and indene as the monomer components forming the backbone (main chain) of the resins. Examples of monomer components which may be contained in the skeleton in addition to coumarone and indene include styrene, $\alpha$-methylstyrene, phenol, methylindene, and vinyltoluene.

The term "terpene resins" refers to polymers containing a terpene compound as a structural monomer, and examples include polymers produced by polymerizing terpene compounds as main components (at least 50% by mass). Specific examples include aromatic modified terpene resins produced by polymerizing terpene compounds and aromatic compounds.

Examples of the aromatic modified terpene resins include terpene-phenolic resins made from terpene compounds and phenolic compounds and terpene-styrene resins made from terpene compounds and styrene compounds. Examples also include terpene-phenol-styrene compounds made from terpene compounds, phenolic compounds, and

styrene compounds.

The term "terpene compounds" refers to hydrocarbons having a composition represented by $(C_5H_8)_n$ or oxygen-containing derivatives thereof, each of which has a terpene backbone and is classified as a monoterpene $(C_{10}H_{16})$, sesquiterpene $(C_{15}H_{24})$, diterpene $(C_{20}H_{32})$, or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

The term "styrene resins" refers to polymers produced from styrenic monomers as structural monomers, and examples include polymers produced by polymerizing styrenic monomers as main components (at least 50% by mass). Specific examples include homopolymers produced by polymerizing single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, or p-chlorostyrene), copolymers produced by copolymerizing two or more styrenic monomers, and copolymers of styrenic monomers and additional monomers copolymerizable therewith. Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride. Preferred among these are solid α-methylstyrene resins (e.g., α-methylstyrene homopolymers, copolymers of α-methylstyrene and styrene).

The term "acrylic resins" refers to polymers containing acrylic monomers as structural units. Examples include styrene-acrylic resins, such as styrene acrylic resin that contains carboxylic groups and is obtained by copolymerizing an aromatic vinyl monomer component and an acrylic monomer component.

Examples of the rosin resins include rosin resins (rosin derivatives), typically aromatic ring-containing natural rosin, aromatic ring-containing polymerized rosin, and aromatic ring-containing modified rosin, and ester compounds or hydrogenated products of these rosins.

The term "dicyclopentadiene resins" refers to resins containing dicyclopentadiene (DCPD) as a main monomer component of the backbone (main chain) of the resins, and examples include polymers having a dicyclopentadiene-derived unit content of 50% by mass or more based on 100% by mass of the resins. Specific examples of the dicyclopentadiene resins include aromatic ring-containing petroleum resins made mainly from dicyclopentadiene produced by dimerization of cyclopentadiene extracted from the C5 fraction of petroleum. The dicyclopentadiene resins may be hydrogenated dicyclopentadiene resins.

Examples of the phenolic resins include KORESIN (BASF) and TACKIROL (Taoka Chemical Co., Ltd). Examples of the coumarone-indene resins include COUMARONE (Nitto Chemical Co., Ltd.), ESCURON (NIPPON STEEL Chemical), and NEOPOLYMER (Nippon Petrochemicals Co., Ltd.). Examples of the styrene resins include Sylvatraxx (registered trademark) 4401 (KRATON Corporation). Examples of the terpene resins include TR7125 (Arizona Chemical) and TO125 (Yasuhara Chemical Co., Ltd.).

Usable resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, KRATON Corporation, Nitto Chemical Co., Ltd., Nippon Shokubai Co., Ltd., ENEOS Corporation, Arakawa Chemical Industries, Ltd., Taoka Chemical Co., Ltd., etc.

The rubber composition contains a resin as the plasticizer.

Preferred among the above resins are solid resins, also preferred are aromatic petroleum resins which are solid at 25°C, more preferred are phenolic resins, coumarone-indene resins, terpene resins, styrene resins, acrylic resins, rosin resins, and dicyclopentadiene resins, all of which are solid at 25°C, and hydrogenated products thereof, still more preferred are phenolic resins and coumarone-indene resins, all of which are solid at 25°C, and hydrogenated products thereof, and particularly preferred are coumarone-indene resins which are solid at 25°C and hydrogenated products thereof.

The amount of the resin per 100 parts by mass of the rubber component content in the rubber composition is preferably 5 parts by mass or more, more preferably 8 parts by mass or more, still more preferably 10 parts by mass or more, further still more preferably 15 parts by mass or more, while it is preferably 50 parts by mass or less, more preferably 40 parts by mass or less, still more preferably 30 parts by mass or less, further still more preferably 25 parts by mass or less. When the amount is within the range indicated above, the advantageous effect tends to be better achieved.

The softening point of the resin is preferably 30°C or higher, more preferably 50°C or higher, still more preferably 80°C or higher, while it is preferably 200°C or lower, more preferably 160°C or lower, still more preferably 140°C or lower, particularly preferably 120°C or lower. When the softening point is within the range indicated above, the advantageous effect tends to be better achieved.

Herein, the softening point of the resin is determined in accordance with JIS K 6220-1:2001 using a ring and ball softening point measuring apparatus and defined as the temperature at which the ball drops down.

The liquid polymers are (co)polymers which are liquid at room temperature (25°C) and may be liquid rubbers, for example. The liquid polymers may be hydrogenated or not hydrogenated, and may also be modified or not modified with a

functional group such as a carboxy group. When the liquid polymers are copolymers, they may be random copolymers or block copolymers of monomers, preferably random copolymers.

Examples of the liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group.

The weight average molecular weight (Mw) of the liquid rubbers is preferably $1.0 \times 10^3$ to $1.0 \times 10^4$, more preferably $3.0 \times 10^3$ to $8.5 \times 10^3$ as measured by gel permeation chromatography (GPC) and calibrated with polystyrene standards. The lower limit and the upper limit of the Mw of the liquid rubbers may be 4500 or 8500.

Herein, the Mw of the liquid rubbers is measured by gel permeation chromatography (GPC) and calibrated with polystyrene standards.

Usable liquid rubbers may be commercially available from Sartomer, Kraray, etc. These may be used alone or in combinations of two or more.

The rubber composition preferably contains a liquid rubber as a plasticizer. The amount of the liquid rubber per 100 parts by mass of the rubber component content is preferably 1 part by mass or more, more preferably 5 parts by mass or more, still more preferably 10 parts by mass or more, while it is preferably 50 parts by mass or less, more preferably 40 parts by mass or less, still more preferably 30 parts by mass or less, further still more preferably 20 parts by mass or less. When the amount is within the range indicated above, the advantageous effect tends to be better achieved.

The rubber composition may contain an antioxidant.

Examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable antioxidants may be commercially available from Seiko Chemical Co., Ltd., Sumitomo Chemical Co., Ltd., Ouchi Shinko Chemical Industrial Co., Ltd., Flexsys, etc. These may be used alone or in combinations of two or more.

The amount of antioxidants per 100 parts by mass of the rubber component content in the rubber composition is preferably 0.5 parts by mass or more, more preferably 0.8 parts by mass or more, still more preferably 1.0 parts by mass or more, further still more preferably 3.0 parts by mass or more, while it is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. Usable waxes may be commercially available from Ouchi Shinko Chemical Industrial Co., Ltd., Nippon Seiro Co., Ltd., Seiko Chemical Co., Ltd., etc. These may be used alone or in combinations of two or more.

The amount of waxes per 100 parts by mass of the rubber component content in the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain stearic acid.

The stearic acid used may be a conventional one. Usable stearic acid may be commercially available from NOF Corporation, Kao Corporation, FUJIFILM Wako Pure Chemical Corporation, Chiba Fatty Acid Co., Ltd., etc. These may be used alone or in combinations of two or more.

The amount of stearic acid per 100 parts by mass of the rubber component content in the rubber composition is preferably 1.0 parts by mass or more, more preferably 2.0 parts by mass or more, still more preferably 3.0 parts by mass or more, while it is preferably 10.0 parts by mass or less, more preferably 6.0 parts by mass or less. When the amount is within the range indicated above, the advantageous effect tends to be better achieved.

The rubber composition may contain zinc oxide.

The zinc oxide used may be a conventional one. Usable zinc oxide may be commercially available from Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. These may be used alone or in combinations of two or more.

The amount of zinc oxide per 100 parts by mass of the rubber component content in the rubber composition is preferably 1.0 parts by mass or more, more preferably 2.5 parts by mass or more, still more preferably 3.0 parts by mass or more, further still more preferably 3.5 parts by mass or more, while it is preferably 10.0 parts by mass or less, more

preferably 6.0 parts by mass or less. When the amount is within the range indicated above, the advantageous effect tends to be better achieved.

The rubber composition may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the rubber composition is preferably 0.5 parts by mass or more, more preferably 1.5 parts by mass or more, still more preferably 1.8 parts by mass or more, while it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable vulcanization accelerators may be commercially available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the rubber composition is preferably 1.5 parts by mass or more, more preferably 2.5 parts by mass or more, still more preferably 3.5 parts by mass or more, further still more preferably 5.0 parts by mass or more, while it is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of such additives are each preferably 0.1 to 200 parts by mass per 100 parts by mass of the rubber component content.

The rubber composition may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100°C to 180°C, preferably 120°C to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by, for example, press vulcanization. The vulcanization temperature is usually 140°C to 190°C, preferably 150°C to 185°C. The vulcanization time is usually 5 to 15 minutes.

The rubber composition is for use in treads (in particular, parts (cap treads) to come into contact with the road surface during driving).

The tire of the present invention may be produced from the above-mentioned rubber composition by usual methods.

Specifically, the rubber composition in an unvulcanized state is extruded into the shape of a tread and assembled with other tire components on a tire building machine in a usual manner to build an unvulcanized tire. The unvulcanized tire is then heated and pressurized in a vulcanizer, whereby the tire is produced.

The tire includes a tread including a rubber composition that contains a rubber component including a styrene-butadiene rubber, a silica, a carbon black, a resin, and an ester plasticizer. The total plasticizer content (total plasticizer content (parts by mass) per 100 parts by mass of the rubber component) of the rubber composition and the land ratio LR (%) of the tread satisfy the following formula (2):

$$(2)\quad (\text{Total plasticizer content}/\text{LR}) \times 100 > 50.$$

The value on the right side of "(Total plasticizer content/LR) × 100" is preferably more than 51, more preferably more than 53, still more preferably more than 70, further still more preferably more than 100, further still more preferably more than 120, further still more preferably 121 or more, further still more preferably 122 or more, further still more preferably 123 or more, while it is preferably less than 200, more preferably less than 170, still more preferably less than 150, further still more preferably less than 140, further still more preferably 137 or less. When the value is within the range indicated above, the advantageous effect tends to be better achieved.

Herein, when the tire is a pneumatic tire, the land ratio (LR) is calculated from a contact patch obtained under the conditions of normal rim, normal internal pressure, and normal load. When the tire is a non-pneumatic tire, the LR can be calculated as described above without normal internal pressure.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

The term "normal load" refers to a load specified for each tire by the standard in a standard system including standards according to which the tire is provided and is a maximum mass which is allowed to impose on tires. The normal load may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The contact patch may be determined by mounting the tire on a normal rim, applying a normal internal pressure to the tire, allowing the tire to stand at 25°C for 24 hours, applying black ink to the tread surface of the tire, and pressing the tread surface against a cardboard at a normal load (camber angle: 0°) for transfer to the cardboard. The transfer is performed on the tire in five positions while rotating the tire by 72° each in the circumferential direction. Namely, the contact patch is obtained five times. Here, in each of the five contact patches, portions interrupted by the grooves in the contour are smoothly connected, and the resulting shape is determined as a virtual ground contact face.

The land ratio (LR) is calculated by the equation:

(Average of the areas of five contact patches (parts with black ink) transferred to cardboard)/(Average of the areas of virtual ground contact faces obtained from the five contact patches) × 100 (%).

The land ratio LR (%) of the tread is preferably 60% or higher, more preferably 70% or higher, still more preferably 75% or higher, further still more preferably 76% or higher, still more preferably 80% or higher, while it is preferably 95% or lower, more preferably 90% or lower, still more preferably 85% or lower. When the LR is within the range indicated above, the advantageous effect tends to be better achieved.

The tire includes a tread including a rubber composition that contains a rubber component including a styrene-butadiene rubber, a silica, a carbon black, a resin, and an ester plasticizer. The total styrene content S (% by mass) of the rubber component and the thickness T (mm) of the tread satisfy the following formula (3):

$$(3)\ S \times T < 300.$$

A product of S × T is preferably less than 290, more preferably 280 or less, still more preferably less than 260, further still more preferably 256 or less, further still more preferably less than 230, further still more preferably less than 200, further still more preferably 192 or less, while it is preferably more than 30, more preferably more than 50, still more preferably more than 100, further still more preferably more than 150, further still more preferably 180 or more. When the product is within the range indicated above, the advantageous effect tends to be better achieved.

Herein, the term "thickness (T) of a tread" refers to the thickness of the tread before using the tire (new tire). Specifically, it is the largest thickness of the tread measured from the tread surface (outer surface of the tire) to the outer face of a reinforcing layer such as a band layer. For example, the thickness of a two-layer tread consisting of a cap tread and a base tread is the total thickness of the cap tread and the base tread at the thickest part of the two-layer tread. Likewise, the thickness of a tread consisting of three or more layers is the total thickness of these layers at the thickest part of the tread. The thickness at a point on the tread surface is measured along the normal of the tread surface at the point. The thickness T of the tread is the largest thickness among the thicknesses measured at points on the tread surface. The tread portion in the present invention may consist of one layer of a cap rubber layer or two layers consisting of a cap rubber layer and a base rubber layer provided on the inner side of the cap rubber layer. Moreover, the tread portion may consist of three layers or four or more layers.

The thickness T (mm) of the tread is preferably 5.0 mm or more, more preferably 5.5 mm or more, still more preferably 6.0 mm or more, further still more preferably 7.0 mm or more, further still more preferably 7.5 mm or more, further still more preferably 8.0 mm or more, while it is preferably 10.0 mm or less, more preferably 9.5 mm or less, still more preferably 9.0 mm or less. When the thickness is within the range indicated above, the advantageous effect tends to be better achieved.

Examples of the tire include pneumatic tires and non-pneumatic tires. Of these, the tire is preferably a pneumatic tire. In particular, the tire can be suitably used as a summer tire, a winter tire (studless tire, snow tire, studded tire, etc.), an all-season tire, for example. The tire can be used for passenger cars, large passenger cars, large SUVs, heavy-duty vehicles such as trucks and buses, light trucks, or motorcycles, or as a racing tire (high performance tire), etc. Of these, the tire can be suitably used as a passenger car tire or a racing tire (high performance tire). Here, the term "passenger car tire" refers to a tire supposed to be mounted on an automobile that runs with four or more wheels and having a maximum load capacity (normal load) of 1400 kg or less.

EXAMPLES

Examples (working examples) which are considered preferable to implement the present invention are described below. Yet, the scope of the invention is not limited to the examples.

Tires produced using the chemicals listed below according to the specifications varied as shown in the tables were examined. The results calculated according to the below-described evaluations are shown in the tables.

SBR 1: HP755B (ENEOS Materials Corporation, S-SBR, styrene content: 40% by mass, vinyl content: 40% by mass, an oil-extended product having an oil content of 37.5 parts by mass per 100 parts by mass of rubber solid content)
SBR 2: ESBR1723 (ENEOS Materials Corporation, E-SBR, styrene content: 24% by mass, vinyl content: 17% by mass, an oil-extended product with an oil content of 37.5 parts by mass per 100 parts by mass of rubber solid content)
SBR 3: S-SBR produced in Production Example 1 described below, styrene content: 40% by mass, vinyl content: 40% by mass, a non-oil-extended product with no oil content per 100 parts by mass of rubber solid content
SBR 4: HPR830E (ENEOS Materials Corporation, S-SBR, styrene content: 40% by mass, vinyl content: 40% by mass, an oil-extended product with an oil content of 10 parts by mass per 100 parts by mass of rubber solid content)
SBR 5: ESBR1502 (ENEOS Materials Corporation, E-SBR, styrene content: 24% by mass, vinyl content: 17% by mass, a non-oil-extended product with no oil content per 100 parts by mass of rubber solid content)
Carbon black: Seast 9 (Tokai Carbon Co., Ltd., $N_2SA$: 142 $m^2/g$, DBP oil absorption: 115 ml/100 g)
Silica 1: ZEOSIL 1165MP (Solvey, $N_2SA$: 160 $m^2/g$, average particle size: 17 nm)
Silica 2: ZEOSIL Premium 200MP (Solvey, $N_2SA$: 220 $m^2/g$, average particle size: 14 nm)
Silane coupling agent: Si69 (Evonik, bis[3-triethoxysilyl)propyl]polysulfide)
Resin 1: SYLVATRAXX4401 (KRATON, α-methylstyrene resin)
Resin 2: KORESIN (BASF, phenolic resin)
Resin 3: V-120 (Nitto Chemical Co., Ltd., coumarone-indene resin)
Ester plasticizer 1: DOS (Daihachi Chemical Industry Co., Ltd., bis(2-ethylhexyl) sebacate, SP value: 8.4)
Ester plasticizer 2: sunflower oil (Nisshin Oillio Group)
Ester plasticizer 3: soybean oil (Nisshin Oillio Group)
Liquid rubber: L-SBR-820 (KRARAY, liquid SBR, Mw: 8500)

Oil: VIVATEC500 (H&R)
Zinc oxide: zinc oxide #1 (Mitsui Mining & Smelting Co., Ltd.)
Stearic acid: stearic acid "TSUBAKI" (NOF Corporation)
Antioxidant: NOCCRAC 6C (Ouchi Shinko Chemical Industrial Co., Ltd., N-(1,3-dimethylbutyl)-N'-phenyl-p-phenylenediamine)
Wax: SUNNOC N (Ouchi Shinko Chemical Industrial Co., Ltd.)
Sulfur: powdered sulfur (Tsurumi Chemical Industry Co., Ltd.)
Vulcanization accelerator 1: NOCCELER DM-P (Ouchi Shinko Chemical Industrial Co., Ltd., dibenzothiazyl disulfide)
Vulcanization accelerator 2: NOCCELER D (Ouchi Shinko Chemical Industrial Co., Ltd., 1,3-diphenylguanidine)

(Production Example 1)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions. The maximum temperature reaches 85°C. Once the polymerization conversion ratio reaches 99%, 1,3-butadiene is further added, and polymerization is carried out for additional five minutes. Subsequently, a mixture of tetraglycidyl-1,3-bisaminomethylcyclohexane (monomer) and an oligomer component is added as a modifier to carry out a reaction. After completion of the polymerization reaction, 2,6-di-tert-butyl-p-cresol is added. Next, the solvent is removed by steam stripping, and the resulting product is dried on hot rolls adjusted at 110°C, whereby SBR 3 is produced.

<Production of test tire>

According to the formulations in the tables, the chemicals other than the sulfur and the vulcanization accelerators are kneaded in a 1.7-L Banbury mixer (Kobe Steel, Ltd.) at 160°C for four minutes to obtain a kneaded mixture. Next, the kneaded mixture is kneaded with the sulfur and vulcanization accelerators using an open roll mill at 80°C for four minutes to obtain an unvulcanized rubber composition.
The unvulcanized rubber composition is formed into the shape of a tread and assembled with other tire components on a tire building machine to build an unvulcanized tire. The unvulcanized tire is vulcanized at 170°C for 12 minutes, whereby a test tire (size: 195/65R15) is produced.
Test tires including rubber compositions prepared according to the specifications varied as shown in the tables were simulated. The results calculated according to the abrasion resistance evaluation described below are shown in the table.
The reference formulations are as follows.

Table 1: Formulation 1-1
Table 2: Formulation 2-1

<Abrasion resistance>

The test tires were mounted on a vehicle. After driving 8000 km, the groove depth in the tire tread portion was measured. A running distance that caused a 1 mm decrease in the tire groove depth was calculated and expressed as an index (abrasion resistance index) using the following equation. A higher index indicates better abrasion resistance.

(Abrasion resistance index) = (Running distance that causes 1 mm decrease in groove depth)/ (Running distance that causes 1 mm decrease in groove depth of reference formulation tire)

[Table 1]

[Table 2]

| | | Formulation | | | | | | | | | | | | | | | | |
|---|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 |
| Formulation (parts by mass) | SBR 1 | 100 | 100 | 100 | 100 | 100 | 0 | 0 | 0 | 100 | 0 | 0 | 0 | 0 | 0 | 0 | 0 | 0 |
| | SBR 2 | 0 | 0 | 0 | 0 | 0 | 0 | 0 | 100 | 0 | 100 | 100 | 100 | 100 | 50 | 100 | 100 | 100 |
| | SBR 3 | 0 | 0 | 0 | 0 | 0 | 100 | 100 | 0 | 0 | 0 | 0 | 0 | 0 | 50 | 0 | 0 | 0 |
| | Extender oil content | 37.5 | 37.5 | 37.5 | 37.5 | 37.5 | 0 | 0 | 0 | 37.5 | 37.5 | 37.5 | 37.5 | 37.5 | 18.75 | 37.5 | 37.5 | 37.5 |
| | Carbon black | 10 | 20 | 10 | 20 | 10 | 20 | 20 | 20 | 20 | 20 | 20 | 20 | 20 | 20 | 20 | 20 | 20 |
| | Silica 1 | 70 | 20 | 100 | 70 | 70 | 70 | 70 | 70 | 100 | 100 | 100 | 100 | 120 | 100 | 100 | 100 | 0 |
| | Silica 2 | 0 | 0 | 0 | 0 | 0 | 0 | 0 | 0 | 0 | 0 | 0 | 0 | 0 | 0 | 0 | 0 | 100 |
| | Silane coupling agent | 7 | 2 | 10 | 7 | 7 | 7 | 7 | 7 | 10 | 10 | 10 | 10 | 10 | 10 | 10 | 10 | 10 |
| | Resin 1 | 0 | 0 | 0 | 0 | 20 | 0 | 0 | 0 | 0 | 0 | 0 | 0 | 0 | 0 | 0 | 0 | 0 |
| | Resin 2 | 0 | 0 | 0 | 0 | 0 | 0 | 0 | 0 | 25 | 25 | 25 | 0 | 0 | 0 | 0 | 0 | 0 |
| | Resin 3 | 0 | 0 | 0 | 0 | 0 | 0 | 0 | 0 | 0 | 0 | 0 | 25 | 25 | 25 | 25 | 25 | 25 |
| | Ester plasticizer 1 | 0 | 0 | 0 | 0 | 0 | 0 | 15 | 0 | 10 | 10 | 10 | 10 | 10 | 10 | 10 | 10 | 10 |
| | Liquid rubber | 0 | 0 | 0 | 0 | 0 | 0 | 0 | 0 | 0 | 0 | 20 | 20 | 20 | 20 | 20 | 20 | 20 |
| | Oil | 30 | 30 | 30 | 30 | 10 | 30 | 15 | 30 | 20 | 20 | 10 | 10 | 10 | 28.75 | 10 | 10 | 10 |
| | Zinc oxide | 3 | 3 | 3 | 3 | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 | 2 | 2 | 2 | 2 |
| | Antioxidant | 3 | 3 | 3 | 3 | 3 | 3 | 3 | 3 | 3 | 3 | 3 | 3 | 3 | 3 | 3 | 3 | 3 |
| | Wax | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 3 | 3 | 3 | 3 | 3 | 3 | 3 | 3 | 3 | 3 | 3 | 3 | 3 | 3 | 3 | 3 | 3 |
| | Vulcanization accelerator 2 | 2 | 2 | 2 | 2 | 2 | 2 | 2 | 2 | 2 | 2 | 2 | 2 | 2 | 2 | 2 | 2 | 2 |
| | Total | 271 | 226 | 304 | 281 | 271 | 243.5 | 243.5 | 243.5 | 339 | 339 | 349 | 349 | 369 | 349 | 349 | 349 | 349 |
| Specification/Evaluation | Silica content | 70 | 20 | 100 | 70 | 70 | 70 | 70 | 70 | 100 | 100 | 100 | 100 | 120 | 100 | 100 | 100 | 100 |
| | Carbon black content | 10 | 20 | 10 | 20 | 10 | 20 | 20 | 20 | 20 | 20 | 20 | 20 | 20 | 20 | 20 | 20 | 20 |
| | Total plasticizer content | 67.5 | 67.5 | 67.5 | 67.5 | 67.5 | 30 | 30 | 30 | 92.5 | 92.5 | 102.5 | 102.5 | 102.5 | 102.5 | 102.5 | 102.5 | 102.5 |
| | Land ratio LR (%) | 75 | 75 | 75 | 75 | 75 | 75 | 75 | 75 | 75 | 76 | 75 | 75 | 75 | 75 | 85 | 75 | 75 |
| | (Total plasticizer content/LR) × 100 | 90 | 90 | 90 | 90 | 90 | 40 | 40 | 40 | 123 | 122 | 137 | 137 | 137 | 137 | 121 | 137 | 137 |
| | Total styrene content S (% by mass) of rubber component | 40.0 | 40.0 | 40.0 | 40.0 | 40.0 | 40.0 | 40.0 | 24.0 | 40.0 | 24.0 | 24.0 | 24.0 | 24.0 | 32.0 | 24.0 | 24.0 | 24.0 |
| | Thickness T (mm) of tread | 8 | 8 | 8 | 8 | 8 | 8 | 8 | 8 | 7 | 8 | 8 | 8 | 8 | 8 | 8 | 7.5 | 8 |
| | S × T | 320 | 320 | 320 | 320 | 320 | 320 | 320 | 192 | 280 | 192 | 192 | 192 | 192 | 256 | 192 | 180 | 192 |
| | Abrasion resistance | 100 | 58 | 82 | 88 | 84 | 78 | 75 | 81 | 118 | 126 | 129 | 135 | 141 | 133 | 148 | 139 | 149 |

| | | Formulation | | | | | | | | | | | | |
|---|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 | 2-12 | 2-13 |
| Formulation (parts by mass) | SBR 4 | 100 | 100 | 100 | 100 | 100 | 100 | 100 | 0 | 0 | 0 | 0 | 0 | 0 |
| | SBR 5 | 0 | 0 | 0 | 0 | 0 | 0 | 0 | 100 | 100 | 100 | 100 | 100 | 100 |
| | Extender oil content | 10 | 10 | 10 | 10 | 10 | 10 | 10 | 10 | 0 | 0 | 0 | 0 | 0 |
| | Carbon black | 10 | 20 | 10 | 20 | 10 | 10 | 10 | 10 | 20 | 20 | 20 | 20 | 20 |
| | Silica 1 | 70 | 20 | 100 | 70 | 70 | 70 | 70 | 70 | 100 | 100 | 100 | 100 | 100 |
| | Silane coupling agent | 7 | 2 | 10 | 7 | 7 | 7 | 7 | 7 | 10 | 10 | 10 | 10 | 10 |
| | Resin 1 | 0 | 0 | 0 | 0 | 20 | 0 | 0 | 0 | 0 | 0 | 0 | 0 | 0 |
| | Resin 2 | 0 | 0 | 0 | 0 | 0 | 0 | 0 | 0 | 15 | 15 | 0 | 0 | 0 |
| | Resin 3 | 0 | 0 | 0 | 0 | 0 | 0 | 0 | 0 | 0 | 0 | 15 | 15 | 15 |
| | Ester plasticizer 1 | 0 | 0 | 0 | 0 | 0 | 10 | 0 | 0 | 10 | 10 | 10 | 0 | 0 |
| | Ester plasticizer 2 | 0 | 0 | 0 | 0 | 0 | 0 | 0 | 0 | 0 | 0 | 0 | 10 | 0 |
| | Ester plasticizer 3 | 0 | 0 | 0 | 0 | 0 | 0 | 0 | 0 | 0 | 0 | 0 | 0 | 10 |
| | Liquid rubber | 0 | 0 | 0 | 0 | 0 | 0 | 0 | 0 | 0 | 10 | 10 | 10 | 10 |
| | Oil | 25 | 25 | 25 | 25 | 5 | 15 | 50 | 25 | 15 | 5 | 5 | 5 | 5 |
| | Zinc oxide | 2 | 2 | 2 | 2 | 2 | 2 | 2 | 2 | 3 | 3 | 3 | 3 | 3 |
| | Stearic acid | 2 | 2 | 2 | 2 | 2 | 2 | 2 | 2 | 2 | 2 | 2 | 2 | 2 |
| | Antioxidant | 3 | 3 | 3 | 3 | 3 | 3 | 3 | 3 | 3 | 3 | 3 | 3 | 3 |
| | Wax | 2 | 2 | 2 | 2 | 2 | 2 | 2 | 2 | 2 | 2 | 2 | 2 | 2 |
| | Sulfur | 1.2 | 1.2 | 1.2 | 1.2 | 1.2 | 1.2 | 1.2 | 1.2 | 1.5 | 1.5 | 1.5 | 1.5 | 1.5 |
| | Vulcanization accelerator 1 | 3 | 3 | 3 | 3 | 3 | 3 | 3 | 3 | 3 | 3 | 3 | 3 | 3 |
| | Vulcanization accelerator 2 | 2 | 2 | 2 | 2 | 2 | 2 | 2 | 2 | 2 | 2 | 2 | 2 | 2 |
| | Total | 237.2 | 192.2 | 270.2 | 247.2 | 237.2 | 237.2 | 262.2 | 237.2 | 286.5 | 286.5 | 286.5 | 286.5 | 286.5 |
| Specification/Evaluation | Silica content | 70 | 20 | 100 | 70 | 70 | 70 | 70 | 70 | 100 | 100 | 100 | 100 | 100 |
| | Carbon black content | 10 | 20 | 10 | 20 | 10 | 10 | 10 | 10 | 20 | 20 | 20 | 20 | 20 |
| | Total plasticizer content | 35 | 35 | 35 | 35 | 35 | 35 | 60 | 35 | 40 | 40 | 40 | 40 | 40 |
| | Land ratio LR (%) | 75 | 75 | 75 | 75 | 75 | 75 | 75 | 75 | 75 | 75 | 75 | 75 | 75 |
| | (Total plasticizer content/LR) × 100 | 47 | 47 | 47 | 47 | 47 | 47 | 80 | 47 | 53 | 53 | 53 | 53 | 53 |
| | Total styrene content S (% by mass) of rubber component | 40.0 | 40.0 | 40.0 | 40.0 | 40.0 | 40.0 | 40.0 | 24.0 | 24.0 | 24.0 | 24.0 | 24.0 | 24.0 |
| | Thickness T (mm) of tread | 9 | 8 | 9 | 8 | 8 | 8 | 8 | 8 | 8 | 8 | 8 | 8 | 8 |
| | S × T | 360 | 320 | 360 | 320 | 320 | 320 | 320 | 192 | 192 | 192 | 192 | 192 | 192 |
| | Abrasion resistance | 100 | 51 | 82 | 81 | 85 | 83 | 80 | 91 | 103 | 121 | 128 | 123 | 129 |

## Claims

**1.** A tire comprising a tread,

the tread comprising a rubber composition that contains a rubber component including a styrene-butadiene rubber, a silica, a carbon black, a resin, and an ester plasticizer,
the rubber composition containing the silica in an amount of 90 parts by mass or more and the carbon black in an amount of 15 parts by mass or more per 100 parts by mass of the rubber component,
the rubber composition satisfying the following formula (1),
the tire satisfying the following formulas (2) and (3) with a total plasticizer content of the rubber composition, a total styrene content S (% by mass) of the rubber component, and a land ratio LR (%)measured as detailed in the description and a thickness T (mm) of the tread:

$$(1)\ \text{Amount of silica/Amount of carbon black} > 1$$

$$(2)\ (\text{Total plasticizer content/LR}) \times 100 > 50$$

$$(3)\ S \times T < 300.$$

2. The tire according to claim 1, wherein the total styrene content S (% by mass) of the rubber component and the thickness T (mm) of the tread satisfy the following formula:

$$S \times T < 200.$$

3. The tire according to claim 1 or 2, wherein the resin is an aromatic petroleum resin.

4. The tire according to any one of claims 1 to 3, wherein the ester plasticizer contains acylglycerol.

5. The tire according to any one of claims 1 to 4, wherein the styrene-butadiene rubber is an emulsion-polymerized styrene-butadiene rubber.

6. The tire according to any one of claims 1 to 5, wherein the rubber composition contains a liquid rubber.

7. The tire according to any one of claims 1 to 6, wherein the ratio "amount of silica/amount of carbon black" in the rubber composition is 4.0 or higher.

8. The tire according to any one of claims 1 to 7, wherein the total styrene content S (% by mass) of the rubber component is 35.0% by mass or lower.

9. The tire according to any one of claims 1 to 8, wherein the silica has an average particle size of 18 nm or less.

10. The tire according to any one of claims 1 to 9, wherein the total plasticizer content of the rubber composition per 100 parts by mass of the rubber component is 110 parts by mass or lower.

11. The tire according to any one of claims 1 to 10, wherein the amount of the styrene-butadiene rubber based on 100% by mass of the rubber component in the rubber composition is 50% by mass or more.

12. The tire according to any one of claims 1 to 11, wherein the total plasticizer content of the rubber composition per 100 parts by mass of the rubber component is 40 parts by mass or higher.

13. The tire according to any one of claims 1 to 12, wherein the amount of the silica in the rubber composition per 100 parts by mass of the rubber component is 100 parts by mass or more.

14. The tire according to any one of claims 1 to 13, wherein the land ratio LR of the tread is 70 to 90%.

15. The tire according to any one of claims 1 to 14, wherein the thickness T of the tread is 9.0 mm or less.

## Patentansprüche

1. Reifen, umfassend einen Laufstreifen,

   wobei der Laufstreifen eine Kautschukzusammensetzung umfasst, die eine Kautschukkomponente enthält, welche einen Styrol-Butadien-Kautschuk, ein Siliziumdioxid, einen Ruß, ein Harz und einen Ester-Weichmacher umfasst,
   wobei die Kautschukzusammensetzung das Siliziumdioxid in einer Menge von 90 Massenteilen oder mehr und den Ruß in einer Menge von 15 Massenteilen oder mehr pro 100 Massenteile der Kautschukkomponente enthält,
   wobei die Kautschukzusammensetzung der folgenden Formel (1) genügt,
   wobei der Reifen den folgenden Formeln (2) und (3) mit einem Gesamtweichmachergehalt der Kautschukzusammensetzung, einem Gesamtstyrolgehalt S (Massen-%) der Kautschukkomponente und einem Positivprofilanteil LR (%), gemessen wie in der Beschreibung erläutert, und einer Dicke T (mm) des Laufstreifens genügt:

$$(1)\quad \text{Menge an Siliziumdioxid} / \text{Menge an Ruß} > 1$$

$$(2)\quad (\text{Gesamtweichmachergehalt} / \text{LR}) \times 100 > 50$$

$$(3)\quad S \times T < 300.$$

2. Reifen nach Anspruch 1,
   wobei der Gesamtstyrolgehalt S (Massen-%) der Kautschuckomponente und die Dicke T (mm) des Laufstreifens der folgenden Formel genügen:

$$S \times T < 200.$$

3. Reifen nach Anspruch 1 oder 2, wobei das Harz ein aromatisches Petrolharz ist.

4. Reifen nach einem der Ansprüche 1 bis 3,
   wobei der Ester-Weichmacher Acylglycerin enthält.

5. Reifen nach einem der Ansprüche 1 bis 4,
   wobei der Styrol-Butadien-Kautschuk ein emulsionspolymerisierter Styrol-Butadien-Kautschuk ist.

6. Reifen nach einem der Ansprüche 1 bis 5,
   wobei die Kautschukzusammensetzung einen flüssigen Kautschuk enthält.

7. Reifen nach einem der Ansprüche 1 bis 6,
   wobei das Verhältnis "Menge an Siliziumdioxid / Menge an Ruß" in der Kautschukzusammensetzung 4,0 oder höher ist.

8. Reifen nach einem der Ansprüche 1 bis 7,
   wobei der Gesamtstyrolgehalt S (Massen-%) der Kautschuckomponente 35,0 Massen-% oder niedriger ist.

9. Reifen nach einem der Ansprüche 1 bis 8,
   wobei das Siliziumdioxid eine mittlere Partikelgröße von 18 nm oder weniger aufweist.

10. Reifen nach einem der Ansprüche 1 bis 9,
    wobei der Gesamtweichmachergehalt der Kautschukzusammensetzung pro 100 Massenteile der Kautschukkomponente 110 Massenteile oder niedriger ist.

11. Reifen nach einem der Ansprüche 1 bis 10,
    wobei die Menge des Styrol-Butadien-Kautschuks, bezogen auf 100 Massen-% der Kautschukkomponente in der Kautschukzusammensetzung 50 Massen-% oder mehr ist.

**12.** Reifen nach einem der Ansprüche 1 bis 11,
wobei der Gesamtweichmachergehalt der Kautschukzusammensetzung pro 100 Massenteile der Kautschukkomponente 40 Massenteile oder höher ist.

**13.** Reifen nach einem der Ansprüche 1 bis 12,
wobei die Menge des Siliziumdioxids in der Kautschukzusammensetzung pro 100 Massenteile der Kautschukkomponente 100 Massenteile oder mehr ist.

**14.** Reifen nach einem der Ansprüche 1 bis 13,
wobei der Positivprofilanteil LR des Laufstreifens 70 bis 90% ist.

**15.** Reifen nach einem der Ansprüche 1 bis 14,
wobei die Dicke T des Laufstreifens 9,0 mm oder weniger ist.

## Revendications

**1.** Pneumatique comprenant une bande de roulement,

la bande de roulement comprenant une composition de caoutchouc qui contient un composant de caoutchouc comportant un caoutchouc de styrène butadiène, une silice, un noir de charbon, une résine, et un plastifiant ester, la composition de caoutchouc contenant la silice en une quantité de 90 parties en masse ou plus et le noir de charbon en une quantité de 15 parties en masse ou plus par 100 parties en masse du composant de caoutchouc, la composition de caoutchouc satisfaisant la formule (1) suivante,
le pneumatique satisfaisant les formules (2) et (3) suivantes avec une teneur de plastifiant totale de la composition de caoutchouc, une teneur en styrène totale S (% en masse) du composant de caoutchouc, et un rapport de bord de sillon LR (%) mesuré comme détaillé dans la description et une épaisseur T (mm) de la bande de roulement :

$$(1)\ \text{quantité de silice / quantité de noir de charbon} > 1$$

$$(2)\ (\text{quantité totale de plastifiant / LR}) \times 100 > 50$$

$$(3)\ S \times T < 300.$$

**2.** Pneumatique selon la revendication 1,
dans lequel la teneur en styrène totale S (% en masse) du composant de caoutchouc et l'épaisseur T (mm) de la bande de roulement satisfont la formule suivante :

$$S \times T < 200.$$

**3.** Pneumatique selon la revendication 1 ou 2,
dans lequel la résine est une résine de pétrole aromatique.

**4.** Pneumatique selon l'une quelconque des revendications 1 à 3,
dans lequel le plastifiant ester contient un acylglycérol.

**5.** Pneumatique selon l'une quelconque des revendications 1 à 4,
dans lequel le caoutchouc de styrène butadiène est un caoutchouc de styrène butadiène polymérisé en émulsion.

**6.** Pneumatique selon l'une quelconque des revendications 1 à 5,
dans lequel la composition de caoutchouc contient un caoutchouc liquide.

**7.** Pneumatique selon l'une quelconque des revendications 1 à 6,
dans lequel le rapport « quantité de silice / quantité de noir de charbon » dans la composition de caoutchouc est de 4,0 ou plus.

8. Pneumatique selon l'une quelconque des revendications 1 à 7, dans lequel la quantité de styrène totale S (% en masse) du composant de caoutchouc est de 35,0 % en masse ou moins.

9. Pneumatique selon l'une quelconque des revendications 1 à 8, dans lequel la silice a une taille de particule moyenne de 18 nm ou moins.

10. Pneumatique selon l'une quelconque des revendications 1 à 9, dans lequel la teneur de plastifiant totale de la composition de caoutchouc par 100 parties en masse du composant de caoutchouc est de 110 parties en masse ou moins.

11. Pneumatique selon l'une quelconque des revendications 1 à 10, dans lequel la quantité de caoutchouc de styrène butadiène sur la base de 100 % en masse du composant de caoutchouc dans la composition de caoutchouc est de 50 % en masse ou plus.

12. Pneumatique selon l'une quelconque des revendications 1 à 11, dans lequel la teneur de plastifiant totale de la composition de caoutchouc par 100 parties en masse du composant de caoutchouc est de 40 parties en masse ou plus.

13. Pneumatique selon l'une quelconque des revendications 1 à 12, dans lequel la quantité de la silice dans la composition de caoutchouc par 100 parties en masse du composant de caoutchouc est de 100 parties en masse ou plus.

14. Pneumatique selon l'une quelconque des revendications 1 à 13, dans lequel le rapport de relief LR de la bande de roulement est de 70 à 90 %.

15. Pneumatique selon l'une quelconque des revendications 1 à 14, dans lequel l'épaisseur T de la bande de roulement est de 9,0 mm ou moins.